Europäisches Patentamt

European Patent Office

Office européen des brevets

(19)

(11) Publication number: **0 105 972**
**B1**

(12) # EUROPEAN PATENT SPECIFICATION

(45) Date of publication of patent specification: **26.02.86**

(51) Int. Cl.⁴: **B 60 R 22/10**

(21) Application number: **82201258.9**

(22) Date of filing: **08.10.82**

(54) Car safety belt for children.

(43) Date of publication of application:
**25.04.84 Bulletin 84/17**

(45) Publication of the grant of the patent:
**26.02.86 Bulletin 86/09**

(84) Designated Contracting States:
**AT BE CH DE FR GB LI NL SE**

(56) References cited:
**CA-A-1 012 050**
**CH-A- 453 922**
**US-A-3 582 136**

(73) Proprietor: **B.V. Machine- en metaalwarenfabriek DREMEFA**
**Postbus 18**
**NL-6980 AA Doesburg (NL)**

(72) Inventor: **Drexler, Joannes H.**
**Postbus 18**
**NL-6980 AA Doesburg (NL)**
Inventor: **Peters, Wolfram J. P., Ir.**
**Laan van Overvest 20**
**NL-2613 DM Delft (NL)**

(74) Representative: **den Boer, Jan Johannes, Ir.**
**Octrooibureau Polak & Charlouis Laan Copes van Cattenburch 80**
**NL-2585 GD The Hague (NL)**

Courier Press, Leamington Spa, England.

## Description

The invention relates to a car safety belt for children, adapted to fasten the child to a children's chair and comprising a hip belt portion and a diagonal belt portion and having a releasable click clasp secured to one end of the hip belt portion.

Such belts which are defined in the pre-characterising part of claim 1 are previously known from the document US—A—3 583 136 and are of the so-called three-points belt type, as used for grown-ups. The three-points belt of the known type is not suitable for children in the age group of 9 months up to 3.5 years. Because of the relatively large weight of breast and particularly the head as compared with the remainder of the body, the upper body part bends when a collision occurs over the diagonal belt portion as has been shown with dynamic testing. For children in the age of 9 months to 3.5 years likewise the harness type belt is used, comprising a hip belt portion and two mutually parallel upwardly extending parts connected to said hip belt portion (CA—A—1012 050).

The disadvantage of the last mentioned belt type for children is that in case of emergency, e.g. fire, the child cannot be taken sufficiently quickly from the belt, because its shoulders get stuck behind both harness belt portions. A condition of the new European regulations in this area is that the child must be permitted to be freed from the chair in a single operation. The criterion is that a test dummy fastened in a children's chair has to fall from the chair if it has been pivoted through 180° and after the clasp of the safety belt has been opened.

The invention aims at removing the said disadvantages and at providing a children's belt, satisfying the conditions in the regulations.

This is achieved according to the invention in that the tongue of the click clasp is continued by two projections which at their free ends are connected to the other end of the hip belt portion and to the diagonal belt portion respectively.

The belt is connected to the chair such that the clasp is situated at the side of the chair which is situated obliquely opposite to the upper connection point of the diagonal belt portion. When the clasp is opened the V-shaped tongue with the belt portions connected thereto, may move from the position in front of the child to a position laterally of the child, so that the child may simply be taken from the chair.

For a correct position of the diagonal belt portion relative to the child's neck and breast, it is preferable to have both tongue projections include an obtuse V-angle. Since the shoulder belt portion thereby extends less steep the upper body part can no longer bend over the diagonal portion when a collision occurs.

The invention will hereunder be illustrated with reference to the drawing in which an embodiment of the belt according to the invention, given as an example, is shown.

Fig. 1 is a front view of an autocar chair for children provided with a closed safety belt.

Fig. 2 shows the tongue having the V-shaped projections.

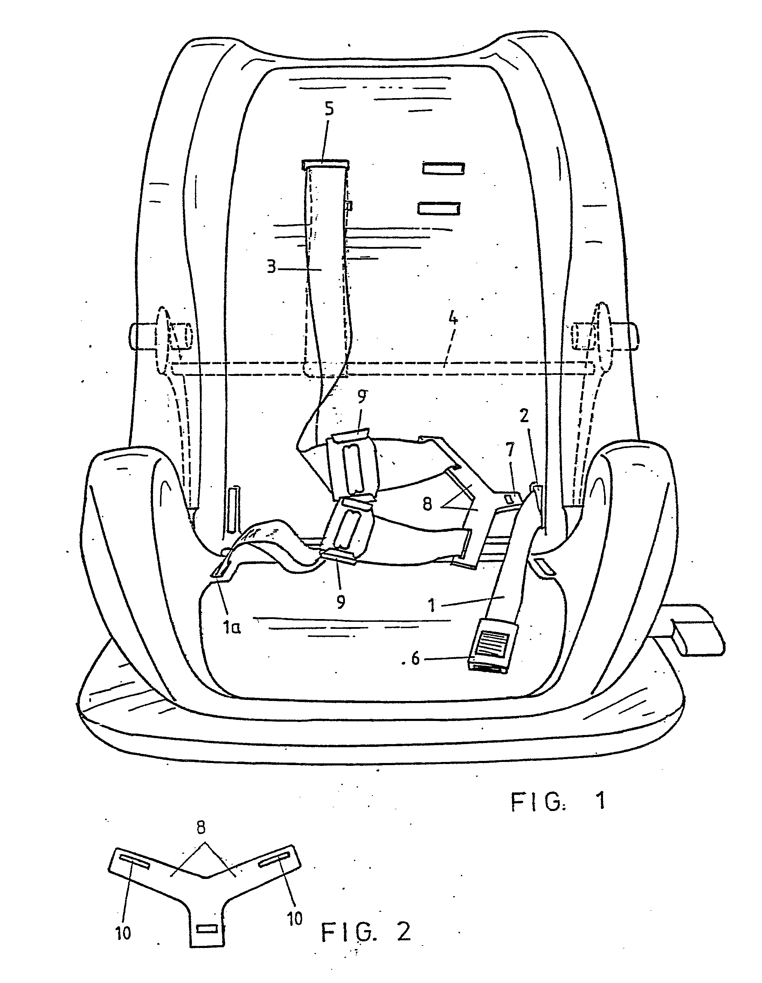

Fig. 1 shows a front view of a chair for children to which the children's car belt according to the invention has been mounted. Said belt comprises a hip belt portion 1, which as seen in the left portion of fig. 1, has been threaded through a slot 1a in the seat part of the chair, extends below said seat and has been threaded upwardly at the right side through a corresponding slot 2 at the lower end of the back of the chair, one such slot likewise being provided at the right and at the left side of the back.

Furthermore the belt has a diagonal portion 3, a not visible end of which is connected to the rear portion of the chair, e.g. to a tube or rod 4 at the rear side of the back and shown in broken lines, and extends through a slot 5 in the upper part of the back.

The hip belt portion 1 is provided at its end shown in the right portion of fig. 1 with a known click clasp 6 into which a tongue 7 is inserted. Said tongue has two projections 8, which include a V-shaped angle. The other end of the hip belt portion 1 and the other end of the diagonal belt portion 3 are connected to the free ends of said projections 8. Furthermore known adjustable buckles 9 are provided in the hip belt portion and in the diagonal portion, whereby the lengths of said portions may be adapted to the child's dimensions.

The belt is connected to the chair such that the clasp 6 is positioned at one side of the chair, in fig. 1 to the right, if the diagonal belt portion is threaded through the obliquely opposite side of the chair in the upper part of the back, and vice versa. For it is that a chair is always connected such to the autocar seat that the upper end of the shoulder belt portion is maximally spaced from the adjacent motor car wall. Then, if a collision occurs, the child will, when bending forwardly, remove itself from said wall, so that the danger of colliding with said wall is reduced. Usually the chair is mounted obliquely opposite the driver's seat. Since said driver's seat is right front in the motor car in cars of countries having left traffic, but in most front left, two mounting possibilities must be present for the belt, namely as indicated and with the clasp 6 to the left in fig. 1 with the upper end of the diagonal portion 3 guided over the back or through the right slot 5 respectively upper right.

When the clasp is opened all belt portions situated in front of the forward side of the chair, except the clasp, move to the left as seen in fig. 1, in that the assembly pivots around a line between the slot 5 and the vanishing point to the rear of the hip belt portion in the left of fig. 1.

By the V-shaped embodiment of the tongue projections a sufficiently shallow extension of the diagonal portion is obtained as contrary to the known three points belts in which the hip belt portion and the diagonal portion intersect in the same point of the tongue. If then the clasp was placed to the right in the chair, the diagonal portion will extend too steep. As said above, the shallow extension of the diagonal portion may be furthered by having the V-shape of the tongue projection including a sufficiently large obtuse angle.

The motor car belt for children as shown, mounted to a safety chair, satisfies all new European regulations (ECE 44) in this respect, particularly the condition that a child fastened by the belt may be quickly freed therefrom.

### Claims

1. A car safety-belt for children adapted to fasten a child to a car chair for children and comprising a hip belt portion (1) and a diagonal belt portion (3), provided with a releasable click clasp (6) connected to one end of the hip belt portion (1), characterized in that the tongue (7) that is to be inserted into the click clasp (6) has been continued by two projections (8) which at their free ends are connected to the other end of the hip belt portion (1) and the diagonal belt portion (3) respectively.

2. A belt according to claim 1, characterized in that both tongue projections (8) include an obtuse V-shaped angle.

### Patentansprüche

1. Ein Wagen-sicherheitsgurt für Kinder, geeignet zur Befestigung eines Kindes in einer Wagenstuhl für Kinder und bestehend aus einem Hüftengurtteil (1) und einem Diagonalgurtteil (3), versehen mit einer lösbaren Klippschnalle (6), verbunden mit einem Ende des Hüftengurtteils (1), dadurch gekennzeichnet, dass die Zunge (7), welche in die Klippschnalle (6) einzustecken ist, mit zwei Verlängerungen (8) fortgesetzt ist, welche an ihren freien Enden verbunden sind mit dem anderen Ende des Hüftengurtteils (1) bezw. mit dem Diagonalgurtteil (3).

2. Gurt nach Anspruch 1, dadurch gekennzeichnet, dass die beiden Zungenverlängerungen (8) einem stumpfen V-förmigen Winkel einschliessen.

### Revendications

1. Ceinture de sécurité d'enfant pour véhicule, adaptée à fixer un enfant à siège d'enfant pour véhicule et comprenant une partie (1) de ceinture de hanche et une partie (3) diagonale de ceinture, prevue d'une boucle (6) déclic détachable relièe à une extrémité de la partie (1) de ceinture de hanche, caractérisée en ce que la langue (7) a insérer dans la boucle (6) déclic a été continuée avec deux projections (8), lesquelles sont reliées à leurs extrémités libres à l'autre extrémité de la partie (1) de ceinture de hanche et respectivement à la partie (3) diagonale de ceinture.

2. Une ceinture selon la revendication 1, caractérisée en ce que les deux projections (8) de la langue enferment un angle obtus en forme de V

FIG. 1

FIG. 2